# EUROPEAN PATENT APPLICATION

(11) **EP 3 438 461 A1**
(43) Date of publication of application: **06.02.2019**
(21) Application number: 17773583.4
(22) Date of filing: 25.01.2017
(51) Int. Cl.: F04D 29/056, F04D 29/42, F04D 29/58

(54) **ELECTRIC FAN AND ELECTRIC VACUUM CLEANER EQUIPPED WITH SAME**

(30) Priority: 29.03.2016 JP 2016065729
(71) Applicant: Mitsubishi Electric Corporation, Chiyoda-ku Tokyo 100-8310 (JP); Mitsubishi Electric Home Appliance Co., Ltd., Fukaya-shi, Saitama 369-1295 (JP)
(72) Inventor: TERAMOTO, Masaya, Fukaya-shi, Saitama 369-1295 (JP); HAYATSU, Mamoru, Fukaya-shi, Saitama 369-1295 (JP); HAMAZAKI, Mitsumasa, Fukaya-shi, Saitama 369-1295 (JP)
(74) Representative: Pfenning, Meinig & Partner mbB
(86) International application number: PCT/JP2017/002560
(87) International publication number: WO 2017/169033

(57) **Abstract**

An electric blower (1) includes: a rotor assembly (6); and a housing (20) accommodating the rotor assembly (6), and having an intake port (20a) and a discharge port (20b). The rotor assembly (6) includes: a shaft (11); an impeller (8) mounted on the shaft (11), and generating a negative pressure at the intake port (20a) by rotation; a rotor core (10) mounted on the shaft (11); and a pair of bearings (9) having an inner peripheral side mounted on an outer periphery of the shaft (11), and having an outer peripheral side fixedly mounted on the housing (20). The pair of bearings (9) are arranged between the impeller (8) and the rotor core (10). The housing (20) includes a frame (5) formed of an integral body of a bearing holding portion (13) and a stator holding portion (14), the bearing holding portion (13) holding the pair of bearings (9) in a state where outer peripheral surfaces of the bearings (9) are in contact with the bearing holding portion (13), and the stator holding portion (14) holding a stator (7) which drives the rotor core (10).

## Description

### Field

The present invention relates to an electric blower.

### Background

In recent years there has been a demand for electric vacuum cleaners to be smaller in size and weight. Accordingly, it is also necessary to reduce the size of an electric blower incorporated into an electric vacuum cleaner. In designing a miniaturized electric blower, when the diameter of an impeller which generates a negative pressure by rotation is reduced, it becomes necessary to cause the impeller to rotate at a higher speed so as to acquire a greater air volume. When the impeller rotates at a higher speed, a temperature of bearings increases along with a high-speed rotation of the impeller leading to a deterioration of the lifespan of the bearings. Particularly, in an electric blower which uses an electric motor of a type which does not use a commutator and brush, such as a DC brushless motor, as a power source, the bearing is a part which is prone to malfunctioning first in many cases. Accordingly, the lifespan of the bearing directly relates to the lifespan of the electric blower. As a method for improving the lifespan, means for dissipating heat generated from bearings using a heat sink structure can be specified. A method is known which adopts a structure where a heat sink assembly equipped with a plurality of legs is fixed to a bearing assembly so as to dissipate heat generated from the bearings (see PTL 1).

### Citation List

### Patent Literature

[PTL 1] JP 2014-220998 A

### Summary

### Technical Problem

However, in the above-mentioned prior art, a sleeve is interposed between the heat sink assembly and the bearings. That is, a structure is adopted where heat generated from the bearings is not easily transferred to a heat sink directly. Further, a surface area of the heat sink assembly is small and hence, a sufficient heat dissipation effect cannot be acquired. Moreover, the heat sink assembly is formed as a part separate from a frame and hence, there is the problem that a large number of steps are required in assembly thus lowering ease of assembly.

The present invention has been made to overcome the above-mentioned problems, and it is an object of the present invention to provide an electric blower having a heat sink structure with a high heat dissipation effect so as to allow bearings to have the long lifespan.

### Solution to Problem

An electric blower according to the present invention includes: a rotor assembly; and a housing accommodating the rotor assembly, and having an intake port and a discharge port. The rotor assembly includes: a shaft; an impeller mounted on the shaft, and generating a negative pressure at the intake port by rotation; a rotor core mounted on the shaft; and a pair of bearings having an inner peripheral side mounted on an outer periphery of the shaft, and having an outer peripheral side fixedly mounted on the housing. The pair of bearings are arranged between the impeller and the rotor core. The housing includes a frame formed of an integral body of a bearing holding portion and a stator holding portion, the bearing holding portion holding the pair of bearings in a state where outer peripheral surfaces of the bearings are in contact with the bearing holding portion, and the stator holding portion holding a stator which drives the rotor core.

### Advantageous Effects of Invention

In the present invention, the housing includes the frame formed of an integral body of the bearing holding portion and the stator holding portion, the bearing holding portion holding the bearings in a state where the outer peripheral surfaces of the bearings are in contact with the bearing holding portion. According to the present invention, it is possible to provide an electric blower where heat generated from the bearings can be efficiently dissipated.

### Brief Description of Drawings

[Fig. 1] Fig. 1 is a perspective view showing an external appearance of an electric blower according to an embodiment 1 of the present invention as viewed from a frame side.
[Fig. 2] Fig. 2 is a longitudinal cross-sectional view of the electric blower according to the embodiment 1 of the present invention taken along a plane passing through the center of a shaft.
[Fig. 3] Fig. 3 is an exploded perspective view of the electric blower according to the embodiment 1 of the present invention.
[Fig. 4] Fig. 4 is a side view of a rotor assembly of the electric blower according to the embodiment 1 of the present invention.
[Fig. 5] Fig. 5 is a longitudinal cross-sectional view of a frame forming a portion of a housing of the electric blower according to the embodiment 1 of the present invention.
[Fig. 6] Fig. 6 is a perspective view showing an external appearance of a frame forming a portion of a housing of an electric blower according to an embodiment 2 of the present invention as viewed from a side where an impeller is disposed.
[Fig. 7] Fig. 7 is a side view of a frame forming a portion of a housing of an electric blower according to an embodiment 3 of the present invention as viewed from a side on which a rib is formed.

### Description of Embodiments

### Embodiment 1.

Hereinafter, embodiments of the present invention are described with reference to drawings.

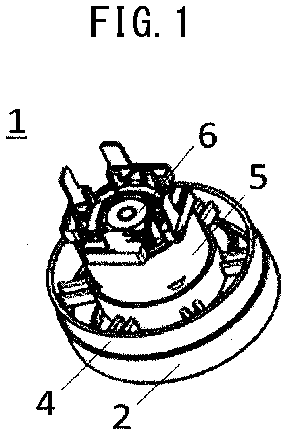

Fig. 1 is a perspective view showing an external appearance of an electric blower according to an embodiment 1 of the present invention as viewed from a frame side.

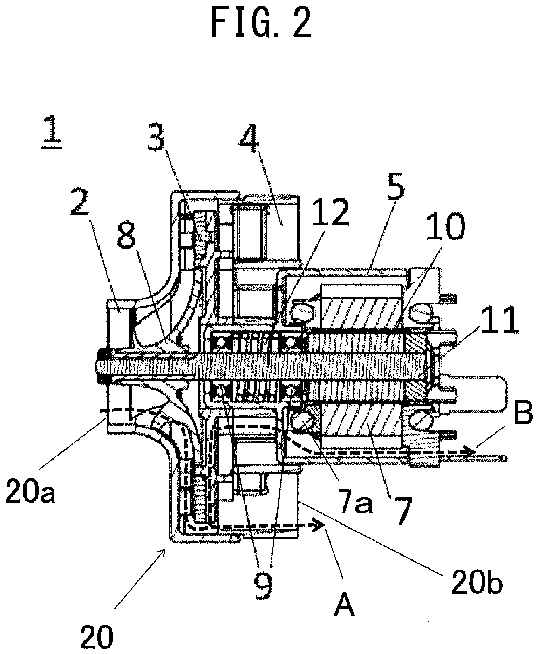

Fig. 2 is a longitudinal cross-sectional view of the electric blower according to the embodiment 1 of the present invention taken along a plane passing through the center of a shaft.

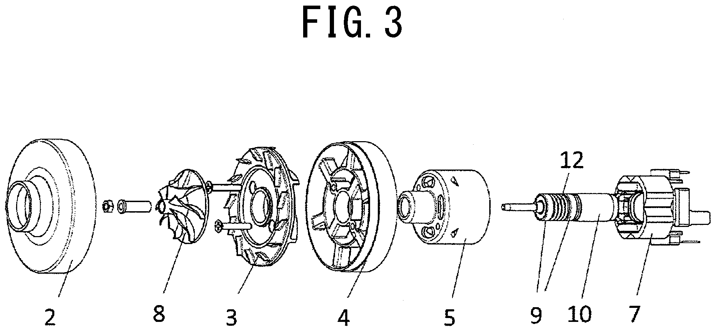

Fig. 3 is an exploded perspective view of the electric blower according to the embodiment 1 of the present invention.

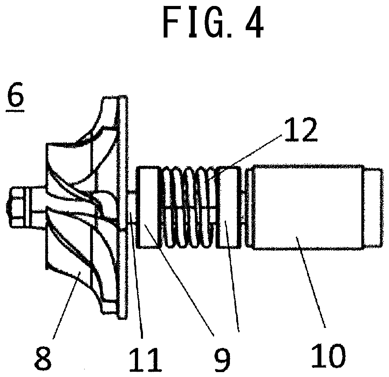

Fig. 4 is a side view of a rotor assembly of the electric blower according to the embodiment 1 of the present invention.

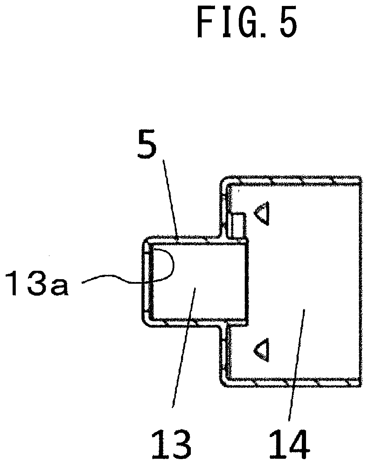

Fig. 5 is a longitudinal cross-sectional view of a frame forming a portion of a housing of the electric blower according to the embodiment 1 of the present invention.

An electric blower 1 includes a rotor assembly 6 and a housing 20. The housing 20 has an intake port 20a and a discharge port 20b, and accommodates the rotor assembly 6 therein. The housing 20 includes a fan cover 2 which covers an impeller 8 described later, a diffuser 3, a bracket 4, a frame 5, and a stator 7.

The rotor assembly 6 includes a shaft 11, the impeller 8, a rotor core 10, and a pair of bearings 9. The impeller 8 is mounted on the shaft 11, and generates a negative pressure at the intake port 20a by rotation. The rotor core 10 is mounted on the shaft 11, and applies a rotational force to the shaft 11 by the stator 7 described later. Inner peripheral surfaces of the pair of bearings 9 are mounted on an outer periphery of the shaft 11, and outer peripheral surfaces of the pair of bearings 9 are fixedly mounted on the housing 20 side. The pair of bearings 9 are arranged between the impeller 8 and the rotor core 10. A spring 12 is provided between the pair of bearings 9, and the spring 12 applies a preload to the bearings 9 in a direction that the bearings 9 separate from each other.

The fan cover 2 has the intake port 20a, and covers the impeller 8. An outer periphery of the fan cover 2 and an outer periphery of the bracket 4 are fixed with each other. The bracket 4 accommodates the diffuser 3 therein. The diffuser 3 is a disk-shaped member, and a plurality of guide blades are disposed in a fixed manner on the impeller 8 side of the diffuser 3. When the impeller 8 rotates in a state where the impeller 8 is mounted on the shaft 11, air is fed outward in the radial direction from the impeller 8, and pressure recovery is performed on the air by an air passage formed by the plurality of guide blades disposed on the diffuser 3 and the fan cover 2. A gap is formed between an outer edge of the diffuser 3 and an inner surface of an outer peripheral portion of the bracket 4, and air is guided to the back surface side of the diffuser 3, that is, to the side where the stator 7 is disposed through the gap.

The frame 5 forms a portion of the housing 20. The frame 5 has a cylindrical shape rotationally symmetrical about the shaft 11, and the cylindrical shape includes a stepped portion. On a paper on which Fig. 5 is drawn, the right side end portion of the frame 5 is open. In the frame 5, a cylindrical portion (first cylindrical portion) having a smaller diameter forms a bearing holding portion 13 which holds the bearings 9 in a state where outer peripheral surfaces of the bearings 9 are in contact with the bearing holding portion 13. In the frame 5, a cylindrical portion (second cylindrical portion) having a larger diameter forms a stator holding portion 14 which holds the stator 7. As described above, the frame 5 is formed of an integral body of the bearing holding portion 13 and the stator holding portion 14. An end portion of the first cylindrical portion on the side which does not communicate with the second cylindrical portion has a flange portion 13a which comes into contact with an end portion of a bearing 9 in an axial direction of the bearing 9. The center of the end portion is open.

As shown in Fig. 3, a center portion of the diffuser 3 and a center portion of the bracket 4 are open, and the bearing holding portion 13, which is the first cylindrical portion, is inserted into the center portions of the diffuser 3 and the bracket 4.

In mounting the rotor assembly 6 into the housing 20, first, the rotor assembly 6 in a state where the impeller 8 is not mounted on the shaft 11 is inserted into the housing 20 through an open end of the second cylindrical portion of the frame 5 from the bearing 9 side. At this stage of operation, the bearing 9 on the side opposite to the rotor core 10 is fixedly mounted on the bearing holding portion 13 in a state where an end portion of the bearing 9 in the axial direction is in contact with an inner surface of the flange portion 13a of the first cylindrical portion of the frame 5. Next, the stator 7 is inserted into the housing 20 through the open end of the second cylindrical portion of the frame 5. The stator 7 is fixed to the stator holding portion 14 in a state where the stator 7 faces the rotor core 10.

Next, the operation of the electric blower according to the embodiment 1 of the present invention is described.

When electric power is supplied to the electric blower 1, a rotational force is applied to the rotor core 10 through the stator 7 so that the impeller 8 is rotationally driven about the shaft 11. When the impeller 8 rotates, air in the vicinity of the impeller 8 is pushed outward in the radial direction. A negative pressure is generated at the intake port 20a of the housing 20 such that the air pushed outward is replenished from outside of the housing 20. As indicated by a first airflow A in Fig. 2, flowing air sucked into the electric blower 1 due to the driving of the impeller 8 passes through the diffuser 3 and the bracket 4 and, thereafter, is discharged to the outside of the housing 20 from the discharge port 20b.

The pair of bearings 9 are held and fixed in a contact state with the bearing holding portion 13 of the frame 5 forming a portion of the housing 20. As a result, heat generated in the bearings 9 due to the rotation of the rotor assembly 6 is directly transferred to the frame 5. The heat is transferred to the frame 5 so that the frame 5 functions as a heat sink. The frame 5 ranging from the bearing holding portion 13 to the stator holding portion 14 is formed of an integral component. Accordingly, the frame 5 has a large surface area and hence, a high heat dissipation effect can be acquired. A portion of the first airflow A discharged from the discharge port 20b flows along an outer periphery of the frame 5 and hence, a heat dissipation effect of the frame 5 can be further enhanced.

As a result, a temperature of the bearings 9 is prevented from significantly increasing and hence, the lifespan of the bearings 9 is extended. Particularly, in an electric blower which uses an electric motor of a type which does not use a commutator and brush, such as a DC brushless motor, as a power source, a bearing is a part which is prone to malfunctioning first in many cases. Accordingly, the above-mentioned configuration leads to the extension of the lifespan of the electric blower as a whole. Further, by causing the frame 5 per se to function as a heat sink, it becomes unnecessary to provide parts having a heat dissipation effect besides the frame 5 and hence, the number of parts is reduced and it is possible to reduce the number of assembly steps. Moreover, the bearing holding portion 13 and the stator holding portion 14 are parts of the same component and hence, accuracy in positioning of the bearing holding portion 13 and accuracy in positioning of the stator holding portion 14 can be ensured by ensuring only accuracy in positioning of the frame 5 alone. Accordingly, a jig and bonding means become unnecessary at the time of assembly and hence, ease of assembly is enhanced.

The bearings 9 are directly fixed to the bearing holding portion 13 in a contact state with the bearing holding portion 13. In the prior art, positions of outer peripheries of a pair of bearings are aligned using a cylindrical sleeve which surrounds the bearings. The sleeve is interposed between the bearings and a frame and hence, heat is not easily transferred directly to the frame from the bearings. In the electric blower 1 of the embodiment 1, heat generated from the bearings 9 is directly transferred to the frame 5 and hence, a heat dissipation effect is enhanced. Further, a sleeve is not used so that the number of parts is reduced whereby it is possible to reduce the number of assembly steps.

As shown in Fig. 5, in the frame 5, an end portion of the bearing holding portion 13 on the stator holding portion 14 side projects in an axial direction of the bearing holding portion 13 toward the stator holding portion 14 side. With such a configuration, as shown in Fig. 2, a stator supporting portion 7a of the stator 7 and the bearing 9 on the stator 7 side can be disposed in an overlapping manner in the axial direction and hence, a distance between the bearings 9 and the rotor core 10 can be narrowed. A load in the radial direction is imposed on the bearings 9 with the rotation of the rotor assembly 6. The narrower the distance between the bearings 9 and the rotor core 10, the smaller the load becomes. Accordingly, such a configuration leads to the extension of the lifespan of the bearings. Further, an axial length of the rotor assembly 6 can be shortened and hence, it is possible to reduce the size of the entire electric blower 1.

The frame 5 is desirably made of an aluminum alloy. An aluminum alloy has high thermal conductivity so that heat generated from the bearings 9 is easily transferred to the frame 5. Accordingly, it is possible to expect that the frame 5 has a high heat dissipation effect as a heat sink.

The bearings 9 may be fixed to the bearing holding portion 13 by an adhesive agent. For example, when the frame 5 is made of an aluminum alloy, and the bearings 9 are made of a material other than an aluminum alloy, a material for forming the frame 5 and a material for forming the bearings 9 differ from each other in coefficient of thermal expansion. When the bearings 9 generate heat due to the rotation of the shaft 11, the frame 5 is also heated. When the bearings 9 and the frame 5 thermally expand, due to the difference in coefficient of thermal expansion, a gap may be formed between the frame 5 and the bearings 9. In this situation, when the bearings 9 are fixed to the bearing holding portion 13 by an adhesive agent having an elastic modulus smaller than an elastic modulus of the bearings 9 or the bearing holding portion 13, bonding between the bearings 9 and the bearing holding portion 13 can be maintained. Accordingly, even when the bearings 9 and the frame 5 thermally expand, it is possible to suppress the bearing 9 escaping from the bearing holding portion 13.

As described above, the electric blower of the embodiment 1 includes the rotor assembly, and the housing accommodating the rotor assembly therein, and having the intake port and the discharge port. The rotor assembly includes the shaft, the impeller mounted on the shaft, and generating a negative pressure at the intake port by rotation, the rotor core mounted on the shaft, and the pair of bearings having the inner peripheral side thereof mounted on the outer periphery of the shaft, and having the outer peripheral side thereof fixedly mounted on the housing side. The pair of bearings are arranged between the impeller and the rotor core. The housing includes the frame formed of the integral body of the bearing holding portion and the stator holding portion. The bearing holding portion holds the pair of bearings in a state where the outer peripheral surfaces of the bearings are in contact with the bearing holding portion. The stator holding portion holds the stator which drives the rotor core. With such a configuration, according to the embodiment 1, it is possible to provide an electric blower where heat generated from the bearings can be efficiently dissipated from the frame.

Further, the end portion of the bearing holding portion projects in the axial direction of the bearing holding portion toward the stator holding portion side and hence, the stator supporting portion and the bearing on the stator side can be disposed in an overlapping manner in the axial. Accordingly, the distance between the bearings and the rotor core can be narrowed. The load in the radial direction is imposed on the bearings with the rotation of the rotor assembly. The narrower the distance between the bearings and the rotor core, the smaller the load becomes. Therefore, such a configuration leads to the extension of the lifespan of the bearings. Further, the axial length of the rotor assembly can be shortened and hence, it is possible to reduce the size of the electric blower.

It may be possible to adopt a structure where the bearing holding portion of the frame does not project toward the stator holding portion side. With such the structure, the frame is allowed to have a shape which can be formed by drawing processing. Accordingly, production cost can be lowered.

Further, the frame is made of an aluminum alloy and hence, heat generated from the bearings is easily transferred to the frame whereby heat generated from the bearings can be efficiently dissipated from the frame.

The bearings are fixed to the bearing holding portion by the adhesive agent having the elastic modulus smaller than the elastic modulus of the bearings or the bearing holding portion. Accordingly, it is possible to suppress the bearing escaping from the bearing holding portion.

### Embodiment 2.

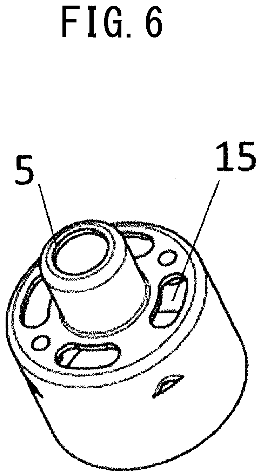

Fig. 6 is a perspective view showing an external appearance of a frame forming a portion of a housing of an electric blower according to an embodiment 2 of the present invention as viewed from a side where an impeller is disposed. The electric blower of the embodiment 2 differs from the electric blower of the embodiment 1 with respect to a point that a surface of a frame 5 perpendicular to a shaft 11 has air holes 15, wherein the surface connects a bearing holding portion 13, which forms a first cylindrical portion, and a stator holding portion, which forms a second cylindrical portion, with each other.

As indicated by a first airflow A in Fig. 2, flowing air sucked into the electric blower 1 due to the driving of an impeller 8 passes through a diffuser 3 and a bracket 4 and, thereafter, is discharged to the outside of the frame 5. A portion of the first airflow A which is discharged from a discharge port 20b flows along an outer periphery of the frame 5 thus cooling the frame 5 from an outer surface of the frame 5. By forming the air holes 15 in the frame 5, as indicated by a second airflow B in Fig. 2, the airflow flows also into the frame 5. The airflow which enters the frame 5 through the air holes 15 is discharged to the outside of the frame 5 through a gap (not shown in the drawing) formed on the leeward side of a stator 7. As described above, the frame 5 is cooled from both the outer surface and an inner surface so that the heat dissipation effect of the frame 5 can be further enhanced.

As described above, in the electric blower of the embodiment 2, the frame has the air holes through which the flow of air generated due to the driving of the impeller flows into the frame. With such a configuration, the airflow which enters the frame through the air holes cools the inner surface of the frame so that heat generated from the bearings can be efficiently dissipated from the frame.

### Embodiment 3.

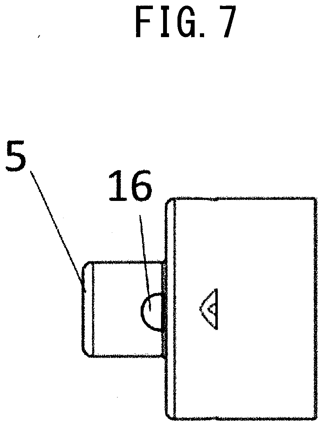

Fig. 7 is a side view of a frame forming a portion of a housing of an electric blower according to an embodiment 3 of the present invention as viewed from a side on which a rib is formed. The electric blower of the embodiment 3 differs from the electric blower of the embodiment 2 with respect to a point that a frame includes the rib in a flow passage for a flow of air generated due to the driving of an impeller.

As indicated by a first airflow A in Fig. 2, flowing air sucked into the electric blower 1 due to the driving of an impeller 8 passes through a diffuser 3 and a bracket 4 and, thereafter, is discharged to the outside of the frame 5. A portion of the first airflow A which is discharged from a discharge port 20b flows along an outer periphery of the frame 5 thus cooling the frame 5 from an outer surface of the frame 5. By forming the air holes 15 in the frame 5, as indicated by a second airflow B in Fig. 2, the airflow flows also into the frame 5. The airflow which enters the frame 5 through the air holes 15 is discharged to the outside of the frame 5 through a gap (not shown in the drawing) formed on the leeward side of a stator 7. As described above, the frame 5 is cooled from both the outer surface and an inner surface so that the heat dissipation effect of the frame 5 can be further enhanced.

As shown in Fig. 7, the frame 5 includes a rib 16 in the flow passage for the flow of air generated due to the driving of the impeller. The rib 16 is formed on a surface of the frame 5 described in the embodiment 2 which has the air holes 15. The rib 16 may have either of a shape which projects toward the bearing holding portion 13 side from the surface in which the air holes 15 are formed or a shape which projects toward the stator holding portion 14 side from the surface in which the air holes 15 are formed. The rib 16 desirably has a flat shape having a wide surface. With the formation of the rib 16, a surface area of the frame 5 increases and hence, the heat dissipation effect is enhanced.

Further, the flat rib 16 is desirably disposed along the flow of the second airflow B. The rib 16 is formed on the surface of the frame 5 which has the air holes 15 such that the rib 16 extends radially along the radial direction. The second airflow B flows inward in the radial direction toward the shaft 11 from a gap formed between an outer edge of the diffuser 3 and an inner surface of an outer peripheral portion of the bracket 4. For example, when the rib 16 has the shape which projects toward the bearing holding portion 13 side from the surface in which the air holes 15 are formed, the second airflow B flows along a side surface of the flat rib 16 disposed radially along the radial direction. With such a configuration, the second airflow B efficiently cools the rib 16. Accordingly, a heat dissipation effect of the frame 5 can be further enhanced. The efficient cooling of the rib 16 also leads to the enhancement of the strength of the frame 5.

The flat rib 16 may be disposed such that the wide surface of the rib 16 is orthogonal to a direction along which the second airflow B flows. In this case, by forming the air holes 15 on the windward side of the wide surface of the rib 16, the second airflow B which impinges on the rib 16 flows along the wide surface. The second airflow B is guided so as to flow toward the air holes 15. The rib 16 may be formed such that a distal end of the rib 16 on the bearing holding portion 13 side inclines toward the upstream side in the second airflow B. The second airflow B is efficiently guided so as to flow toward the air holes 15. As a result, the second airflow B effectively flows into the frame 5 from the air holes 15 so that the airflow cools the inner surface of the frame whereby heat generated from the bearings can be efficiently dissipated from the frame.

When the rib 16 has a shape which projects toward the stator holding portion 14 side from the surface in which the air holes 15 are formed, the rib 16 may be disposed radially along the radial direction. The rib 16 may be disposed such that the direction of the rib 16 is rotated by 90 degrees so that a line perpendicular to the wide surface of the flat rib 16 extends radially along the radial direction. The second airflow B which enters the frame 5 from the air holes 15 flows along the wide surface of the rib 16 thus efficiently cooling the rib 16. Accordingly, a heat dissipation effect of the frame 5 can be further enhanced.

As described above, the rib 16 is formed on the surface in which the air holes 15 are formed. However, the air holes 15 may not be formed in the surface. For example, in the frame 5 having no air holes 15, the rib 16 may be formed on an outer side of the stator holding portion 14. The rib 16 is formed in the flow passage for the first airflow A so that the rib 16 is cooled whereby a heat dissipation effect of the frame 5 can be enhanced.

As described above, in the electric blower of the embodiment 3, the frame includes the rib formed in the flow passage for the flow of air generated due to the driving of the impeller. Accordingly, an airflow generated due to the driving of the impeller cools the rib. The frame on which the rib is formed is cooled and hence, heat generated from the bearings can be efficiently dissipated from the frame.

The electric blower which has been described in the embodiment 1, the embodiment 2 or the embodiment 3, can be used as a drive source of an electric vacuum cleaner, for example. The lifespan of the electric blower directly relates to the product lifespan of an electric vacuum cleaner. Accordingly, by loading an electric blower with the extended lifespan into an electric vacuum cleaner, it is possible to expect the acquisition of an advantageous effect of extending the product lifespan of the electric vacuum cleaner.

### Industrial Applicability

The electric blower according to the present invention is utilized as an electric blower which uses an electric motor of a type which does not use a commutator and brush, such as a DC brushless motor, as a power source, for example. Further, the electric blower according to the present invention is loaded into an electric vacuum cleaner, for example.

### Reference Signs List

1 electric blower
2 fan cover
3 diffuser
4 bracket
5 frame
6 rotor assembly
7 stator
7a stator supporting portion
8 impeller
9 bearing
10 rotor core
11 shaft
12 spring
13 bearing holding portion
13a flange portion
14 stator holding portion
15 air hole
16 rib
20 housing
20a intake port
20b discharge port
A first airflow
B second airflow

## Claims

1. An electric blower comprising:
a rotor assembly; and
a housing accommodating the rotor assembly, and having an intake port and a discharge port, wherein
the rotor assembly includes:
a shaft;
an impeller mounted on the shaft, and generating a negative pressure at the intake port by rotation;
a rotor core mounted on the shaft; and
a pair of bearings having an inner peripheral side mounted on an outer periphery of the shaft, and having an outer peripheral side fixedly mounted on the housing,
the pair of bearings are arranged between the impeller and the rotor core, and the housing includes a frame formed of an integral body of a bearing holding portion and a stator holding portion, the bearing holding portion holding the pair of bearings in a state where outer peripheral surfaces of the bearings are in contact with the bearing holding portion, and the stator holding portion holding a stator which drives the rotor core.

2. The electric blower according to claim 1, wherein
the bearing holding portion projects in an axial direction of the bearing holding portion toward the stator holding portion side.

3. The electric blower according to claim 1 or claim 2, wherein
the frame is made of an aluminum alloy.

4. The electric blower according to any one of claim 1 to claim 3, wherein
the bearing is fixed to the bearing holding portion by an adhesive agent having an elastic modulus smaller than an elastic modulus of the bearing or the bearing holding portion.

5. The electric blower according to any one of claim 1 to claim 4, wherein
the frame has an air hole through which a flow of air generated due to the driving of the impeller flows into the frame.

6. The electric blower according to any one of claim 1 to claim 5, wherein
the frame includes a rib in a flow passage for the flow of air generated due to the driving of the impeller.

7. An electric vacuum cleaner comprising the electric blower described in any one of claim 1 to claim 6.

## Amended claims

### Amended claims under Art. 19.1 PCT

**1.** After amendment) An electric blower comprising:
a rotor assembly; and
a housing accommodating the rotor assembly, and having an intake port and a discharge port, wherein
the rotor assembly includes:
a shaft;
an impeller mounted on the shaft, and generating a negative pressure at the intake port by rotation;
a rotor core mounted on the shaft; and
a pair of bearings having an inner peripheral side mounted on an outer periphery of the shaft, and having an outer peripheral side fixedly mounted on the housing,
the pair of bearings are arranged between the impeller and the rotor core,
the housing includes a frame formed of an integral body of a bearing holding portion and a stator holding portion, the bearing holding portion holding the pair of bearings in a state where outer peripheral surfaces of the bearings are in contact with the bearing holding portion, and the stator holding portion holding a stator which drives the rotor core and
the bearing holding portion projects in an axial direction of the bearing holding portion toward the stator holding portion side.

**2.** (Canceled)

**3.** After amendment) The electric blower according to claim 1, wherein
the frame is made of an aluminum alloy.

**4.** After amendment) The electric blower according to claim 1 or claim 3, wherein
the bearing is fixed to the bearing holding portion by an adhesive agent having an elastic modulus smaller than an elastic modulus of the bearing or the bearing holding portion.

**5.** After amendment) The electric blower according to any one of claim 1 and claim 3 and claim 4, wherein
the frame has an air hole through which a flow of air generated due to the driving of the impeller flows into the frame.

**6.** After amendment) The electric blower according to claim 1 or any one of claim3 to claim 5, wherein
the frame includes a rib in a flow passage for the flow of air generated due to the driving of the impeller.

**7.** After amendment) An electric vacuum cleaner comprising the electric blower described in claim 1 or any one of claim3 to claim 6.

Statement under Art. 19.1 PCT
The basis for the amendment to the claim 1 can be found in original claims 1 and 2 as filed.

The claim 2 is canceled.

The claim 3 is based on original claim 3 as filed.

The claim 4 is based on original claim 4 as filed.

The claim 5 is based on original claim 5 as filed.

The claim 6 is based on original claim 6 as filed.

The claim 7 is based on original claim 7 as filed.
